(19) Europäisches Patentamt / European Patent Office / Office européen des brevets

(11) **EP 2 043 949 B1**

(12) **EUROPÄISCHE PATENTSCHRIFT**

(45) Veröffentlichungstag und Bekanntmachung des Hinweises auf die Patenterteilung:
**11.05.2011  Patentblatt 2011/19**

(21) Anmeldenummer: **07786317.3**

(22) Anmeldetag: **25.07.2007**

(51) Int Cl.:
***C01B 3/06*** *(2006.01)*

(86) Internationale Anmeldenummer:
**PCT/EP2007/006592**

(87) Internationale Veröffentlichungsnummer:
**WO 2008/012078 (31.01.2008 Gazette 2008/05)**

(54) **WASSERSTOFF- UND ENERGIEGEWINNUNG DURCH THERMISCHE UMSETZUNG VON SILANEN**

HYDROGEN AND ENERGY GENERATION BY THERMAL CONVERSION OF SILANES

OBTENTION D'HYDROGÈNE ET D'ÉNERGIE PAR TRANSFORMATION THERMIQUE DE SILANES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.07.2006  DE 102006034885**

(43) Veröffentlichungstag der Anmeldung:
**08.04.2009  Patentblatt 2009/15**

(73) Patentinhaber: **Spawnt Private S.à.r.l.**
**1148 Luxembourg (LU)**

(72) Erfinder:
• PRETTEREBNER, Julius
**71570 Oppenweiler (DE)**
• AUNER, Norbert
**61479 Glashütten (DE)**

(74) Vertreter: **Epping - Hermann - Fischer Patentanwaltsgesellschaft mbH Ridlerstrasse 55 80339 München (DE)**

(56) Entgegenhaltungen:
WO-A-01/85606          WO-A-02/090257
WO-A-2007/019172     US-A- 4 155 712

• ISAO TSUYUMOTO: "A novel sodium silicate fluoride solution and H2 gas fromed by a reaction between Si and an aqueous solution of NaOH and NaF" JOURNAL OF THE AMERICAN CERAMIC SOCIETY, BLACKWELL PUBLISHING, MALDEN, MA, US, Bd. 88, Juni 2005 (2005-06), Seiten 1628-1630, XP002421813 ISSN: 0002-7820

**Beschreibung**

Die Erfindung betrifft ein Verfahren zur Herstellung von Wasserstoff.

Eine der beiden großtechnischen Methoden zur Gewinnung von Reinsilicium ist das "Degussa-Verfahren", welches auf Monosilan als Edukt basiert. Das gasförmige Monosilan wird, auch im Gemisch mit weiteren inerten Gasen, bei Temperaturen über 1000 °C auf Silicium abgeschieden. Sinn der hohen Temperaturen ist vor allem, massives polykristallines Silicium zu erhalten, welches zur weiteren Aufreinigung leicht prozessierbar ist, z. B. durch Aufschmelzen. Die thermische Zersetzung von Monosilan zu mehr oder weniger stark Wasserstoffhaltigen Produkten beginnt jedoch bei erheblich niedrigeren Temperaturen.

Literaturinformationen zeigen, dass bei Drücken zwischen 0,13 und 6,61 MPa und Temperaturen von ca. 400 - 600 °C agglomerierte sphärische Partikel mit einem mittleren Durchmesser von 3 $\mu$m entstehen. Andere Quellen geben den Beginn der Zersetzung mit 450°C an und berichten eine 75%ige Zersetzung bei 500 °C sowie vollständigen Umsatz bei 700 °C. Niedrige Reaktionstemperaturen führen jedoch zu feinteiligen oder sogar amorphen Reaktionsprodukten, wie sie auch beim "Degussa-verfahren" als Nebenprodukte beobachtet werden. Verfahren, die feinteiliges, aus der Gasphase kondensiertes Silicium als Hauptprodukt erzeugen, benötigen eine weitere Prozessierung des Pulvers, um schließlich ein Verarbeiten zu massivem Silicium zu erlauben.

Über Reaktionen von Monosilan mit Wasser ist vergleichsweise wenig bekannt. Aus der Literatur ist es bekannt, dass neutrales flüssiges Wasser gegenüber Monosilan weitgehend inert ist, da Wasser zum Auswaschen von Spurengasen aus Monosilan verwendet werden kann. Ebenso tritt in technischen Prozessen durch Wasserdampf verunreinigtes Monosilan auf.

Andererseits ist bekannt, dass Si-H-Verbindungen in basischen Lösungen nicht stabil sind. da Si eine hohe Oxophilie aufweist. Bereits der Alkaligehalt von Gläsern reicht aus, um die Zersetzung zu initiieren. Ebenso tritt eine Zersetzung in sauren Lösungen ein, wenn auch mit geringerer Geschwindigkeit als im alkalischen pH-Bereich.

Aus der Halbleitertechnologie ist bekannt, dass flüssiges Wasser mit Siliciumoberflächen reagiert und Oxidschichten in der Größenordnung von 1 nm hinterlässt. Ebenso lassen sich aus verschiedenen substituierten Silanen oder auch Si-H-Verbindungen im Gemisch mit Wasserdampf $SiO_2$-Schichten unter geringem Druck in CVD-Prozessen erzeugen.

Experimente mit Salzmischungen, welche festes röntgenamorphes Silicium enthalten, hergestellt aus

$$SiCl_4 + 4\ Na \rightarrow Si_{am} + 4\ NaCl$$

in apolaren organischen Lösemitteln zeigen, dass bei Raumtemperatur mit Wasserdampf gesättigtes Inertgas zwar bei Raumtemperatur nicht oxidativ wirkt, dass für 400 °C innerhalb von ca. 3 h jedoch mehr als 70%, bei 550 °C mehr als 75% Umsatz erreicht werden.

Aus der JP 59045901 A ist die alkalische Umsetzung von Silanen zur Wasserstofferzeugung bekannt. Dieses Verfahren hat den Nachteil, dass Lauge verbraucht wird, dass Wasser im Überschuss erzeugt wird und somit ein hoher Massentransport gegeben ist.

Die WO 2007/0191772 A2 beschreibt ein Verfahren zur Gewinnung von Wasserstoff, bei dem ein Silan bei Raumtemperatur in Anwesenheit eines Katalysators mit Wasser umgesetzt wird.

Es ist Aufgabe der Erfindung, ein effektives Verfahren zur Herstellung von Wasserstoff zu schaffen.

Die Aufgabe wird durch Merkmale des Patentanspruchs 1 gelöst.

Die thermische Umsetzung von Silanen mit Wasserdampf oder Sauerstoff hat den Vorteil einer hohen wasserstoffeffizienz. Außerdem ist der Prozess emissionsfrei. Der entstehende Wasserstoff weist eine hohe Reinheit auf und ist daher vor allem auch zur Verwendung in PEM-Brennstoffzellen geeignet.

Dabei zeigt:

Fig. 1   ein Prozessfließbild gemäß der kompelxesten Variante des Verfahrens, wobei Vereinfachungen und Variantonen des Prozesses möglich aber nicht separat dargestellt sind, und

Fig. 2   eine Übersicht der Simulationsergebnisse zu den unterschiedlichen Varianten.

Monosilan ($SiH_4$) reagiert entsprechend von Gleichung 1 mit wasserdampf bei Temperaturen ab 400°C zu Wasserstoff und $SiO_2$:

$$(1) \qquad SiH_4 + 2\,H_2O \Rightarrow SiO_2 + 4\,H_2$$

Diese Reaktion kann die Basis eines Kraftwerksprozesses sein. In der einfachsten Form wird die Reaktion entsprechend von Gleichung 1 bei einer Temperatur von 400 °C und einem Druck von 3 bar in einem Reaktor durchgeführt.

Die freiwerdende Wärme wird dazu genutzt, das dem Reaktor zugeführte Wasser zu verdampfen. Die überschüssige Wärme wird an die Umgebung abgeführt. Der entstehende Wasserstoff wird einer PEM-Brennstoffzelle (FC) zugeführt (Version 1).

Sofern die Reaktion auch bei höheren Drücken (z. B. 80 bar) erfolgt, kann elektrische Energie zusätzlich dadurch gewonnen werden, wenn der Wasserstoff vor der Brennstoffzelle in einer Gasturbine entspannt wird. Hierzu müssen die Feststoffe durch einen Zyklon abgetrennt werden. Ein Teil der freiwerdenden Wärme aus dem Reaktor kann außerdem für die Verdampfung von zusätzlichem Wasser verwendet werden, so dass dies einer Dampfturbine zugeführt werden kann (Version 2).

Da die Frischdampfparameter des Dampfes sehr gering sind (max. 400 °C bei 80 bar) muss untersucht werden, ob die Reaktion such bei 1000 °C noch selbst erhaltend ist. Die hohen Temperaturen sind dann sowohl vorteilhaft für die Gasturbine, deren Wirkungsgrad mit der Eintrittstemperatur steigt, als auch für den Wasserdampfkreislauf, in dem dann dem Stand der Technik entsprechende Frischdampfparameter realisiert werden können. Die Bereitstellung des Wasserstoffs wurde mit drei verschiedenen Drücken berechnet. Diese sind 3 bar (Version 3a), 30 bar (Version 3b) und 80 bar (Version 3c). Da der Reaktordruck 80 bar entspricht, wird bei Version 3c die Gasturbine entfallen. Schließlich ist eine weitere Druckerhöhung im Reaktor denkbar (300 bar), um die Leistung der Gasturbine weiter zu steigern (Version 4).

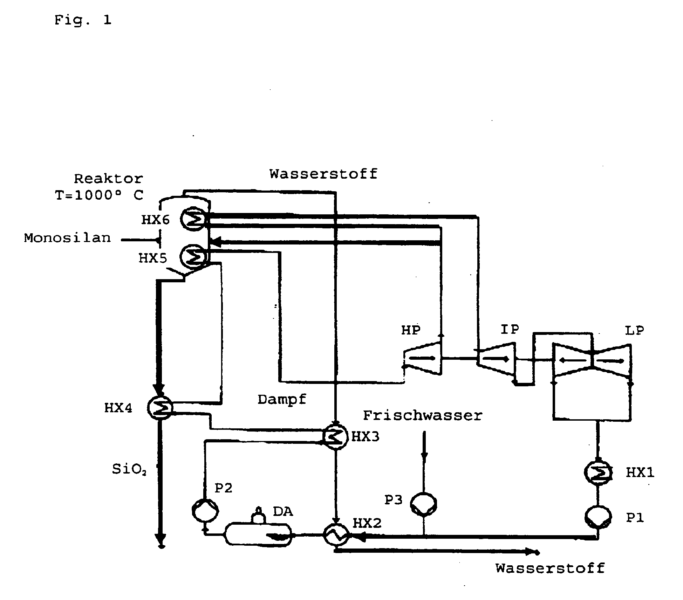

Das Prozessfließbild von Version 3 ist am komplexesten und ist in Fig. 1 dargestellt. Die anderen Versionen sind Vereinfachungen oder Variationen von Version 3, so dass diese nicht abgebildet sind.

Die in Tabelle 1 dargestellten energetischen Wirkungsgrade sind auf den Heizwert von Monosilan bezogen, der mit 44,26 MJ/kg berechnet wird (Vergleich Methan: 50 MJ/kg). Sofern der Wasserstoff nicht der Brennstoffzelle zugeführt wird, berücksichtigen die Wirkungsgrade zusätzlich den Heizwert des Wasserstoffs (120 MJ/kg) anstelle der erzeugten elektrischen erzeugten Energie.

Die exergetischen Wirkungsgrade berücksichtigen hingegen die chemischen und die physikalischen Exergien von Monosilan bzw. von Wasserstoff.

Wirkungsgrade ohne Brennstoffzelle:

$$(2) \qquad \eta_{tot,H_2} = \frac{\dot{m}_{H_2} * LHV_{H_2} + \dot{W}_{el,netto}}{\dot{m}_{SiH_4} * LHV_{SiH_4}}$$

$$(3) \qquad \varepsilon_{tot,H_2} = \frac{\dot{E}_{H_2} + \dot{W}_{el,netto}}{\dot{E}_{SiH_4} + \dot{E}_{H_2O}}$$

Wirkungsgrade mit Brennstoffzelle:

$$(4) \qquad \eta_{tot} = \frac{\dot{W}_{el,netto}}{\dot{m}_{SiH_4} * LHV_{SiH_4}}$$

$$(5) \qquad \varepsilon_{tot} = \frac{\dot{W}_{el,netto}}{\dot{E}_{SiH_4} + \dot{E}_{H_2O}}$$

In der durchgeführten Simulation der Prozesse sind bislang keine Druckverluste berücksichtigt. Außerdem wurde von einer vollständigen Reaktion und einer idealen Trennung der Gemische ausgegangen. Die isentropen Wirkungsgrade der technischen Komponenten wurden mit 90% bei Gasturbine und Mitteldruckturbine, 89% bei der Hochdruckturbine, 87% bei der Niederdruckturbine und 85% bei den Pumpen gewählt. Die Frischdampfparameter betragen 600 °C und 300 bar bzw. 600 °C bei der Zwischenüberhitzung. Die Wärme der Feststoffe wird bis zu einer minimalen Temperatur von 100 °C für die Erwärmung im Wasserdampfkreislauf verwendet. Die freiwerdende Wärme der Brennstoffzelle wird bislang nicht verwendet.

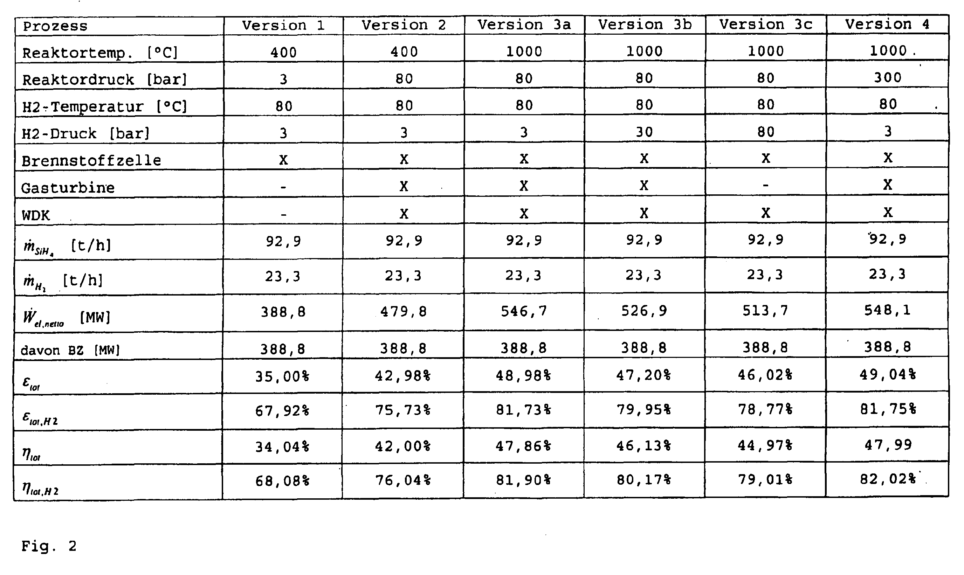

Wie Tabelle 1 zeigt, ist der beste Wirkungsgrad bei Version 4 zu erwarten. Die Verbesserungen gegenüber Version 3a sind jedoch vergleichsweise gering. Eine Übersicht der Ergebnisse ist in der Tabelle gemäß Fig. 2 dargestellt

Ausgehend von den Standardbildungsenthalpien des Monosilans sowie von Wasser und $SiO_2$ ( als Quarz angenähert) zeigt sich, dass die Umsetzung von Monosilan mit Wasser zu $SiO_2$ exotherm verlaufen sollte, mit

$$SiH4 + 2\ H2O \rightarrow Si02 + 4\ H2\ \Delta\Delta fH0 = -373,4\ kJ/mol.$$

Tatsächlich wird die freigesetzte Wärmemenge geringer sein, da $SiO_2$ nicht als kristalliner Quarz anfällt und das Reaktionsprodukt abhängig von Reaktionstemperatur und -zeit auch als Hydrat anfallen kann (enthält Si-OH), wodurch die Stöchiometrie der Reaktion verändert wird.

Im Vergleich zu elementarem Silicium sind Poly- oder Oligosilane sowie insbesondere Monosilan als Wasserstoffspeicher besser geeignet, da bezogen auf die Eduktmasse mehr Wasserstoff freigesetzt werden kann ($Si + 2\ H_2O \rightarrow SiO_2 + 2\ H_2$). Unter Vernachlässigung des eingesetzten Wassers sowie weiterer Katalysatoren oder Reaktanden ergibt sich für elementares Si eine Wasserstoff-Speicherdichte von ca. 14%, für $(SiH_2)_x$ dagegen 20% und für $SiH_4$ 25%. Einschließlich des stöchiometrisch umgesetzten Wassers ergeben sich Speicherkapazitäten von ca. 6% (Si), 9% $((SiH_2)_x)$ und 11,5%. Theoretisch ist aus den Wasserstoffhaltigen Silanen auch eine rein thermische Freisetzung des enthaltenen Wasserstoffes in Anlehnung an das "Degussa-Verfahren" möglich, wobei nach

$SiH_n \rightarrow Si + n/2\ H_2$ (n = 2-4) als Nebenprodukt elementares Silicium entsteht. Die Speicherkapazität läge auf dieser Zersetzungsroute für $((SiH_2)_x$ bei ca. 6,5%, für $SiH_4$ bei 12,5%. Leider lässt sich das gewonnene Silicium nicht durch einfache Hydrierungsreaktionen wieder reversibel zu den Silanen umwandeln. In Anlehnung an die bekannte alkalische Wasserstoffdarstellung aus elementarem Silicium nach

$$Si + 2\ NaOH + H_2O \rightarrow Na_2SiO_3 + 2\ H_2$$

existiert bereits eine japanische Offenlegungsschrift JP 59045901 A, welches die Umsetzung von Silanen mit alkalischen Losungen nach beispielsweise

$$SiH_2 + 2\ NaOH + H_2O \rightarrow Na_2SiO_3 + 3\ H_2$$

zeigt. Unter Berücksichtigung der obigen Informationen ist davon auszugehen, dass eine alkalische Katalyse oder die Reaktion mit Alkalien für erhöhte Temperaturen unnötig ist.

Wird Monosilan oder ein unter den Reaktionsbedingungen gasförmiges oder fein verteiltes Oligosilan bei Temperaturen von 400 °C oder mehr mit Wasserdampf bei Drücken von mindestens 0,1 MPa in Kontakt gebracht, so wird, selbst wenn die direkte Reaktion nicht eintritt, eine Umsetzung erfolgen, da Gasphasenthermolyse elementares Si freisetzt, welches mit Wasser reagiert. Da die Keimgröße in der Gasphase deutlich kleiner als die im Endstadium beobachteten 3 $\mu$m sein sollte, müsste das atomare oder in Clustern anfallende Silicium weitgehend vollständig umgesetzt werden. Es ist allerdings nicht auszuschließen, dass das Reaktionsprodukt, insbesondere bei vergleichsweise niedriger Reaktionstemperatur, noch Si-H-Bindungen enthält, was sich negativ auf die Wasserstoffausbeute auswirkt.

Andererseits sollte die Exothermie der Reaktion zu zusätzlichem selbständigem Aufheizen der Reaktionsmischung führen. Das sinnvolle Mischungsverhältnis $SiH_4 : H_2O$ lässt sich schwer abschätzen, durch die Stöchiometrie der Reaktion ist jedoch eine Mindestmenge von 1 : 2 zur vollständigen Oxidation erforderlich. Ebenso ist nicht auszuschließen, dass die Umsetzung bereits bei Temperaturen < 400 °C eintritt.

Der auf diese Weise erzeugte Wasserstoff ist nach Abtrennung der entstandenen Partikel, bis auf Reste von Wasserdampf, rein und somit besonders geeignet fuhr einen Einsatz in PEM-Brennstoffzellen. Durch die hohe Speicherkapazität ist die Anwendung des Verfahrens auch in mobilen Systemen denkbar. Anstelle einer elektrochemischen Umsetzung ist selbstverständlich auch eine Verbrennung des Wasserstoffes bzw. des Wasserstoff/Dampf-Gemisches in einem Verbrennurigsmotor beliebiger Bauart möglich. Auch für die Anwendung dieser Technologie ist jedoch darauf zu achten dass die Partikellast des erzeugten Wasserstoffgases möglichst gering ist, um Abrasion an beweglichen Teilen zu minimieren. Alternativ ist eine Trennung von Verbrennungsraum und Arbeitsgasvolumen denkbar, wir beispielsweise bei einem Stirling-Motor.

Auch die direkte Verbrennung von Silanen mit Luft zur Gewinnung thermischer Energie ist möglich. Nach

$$SiH_4 + 2\ O_2 \rightarrow SiO_2 + 2\ H_2O\ \Delta\Delta fH0 = -1516,6\ kJ/mol$$

lässt sich aus den Standardbildungsenthalpien eine Wärmemenge abschätzen, die in der Praxis jedoch aus den bereits oben angeführten Gründen geringer ausfallen kann. Zu berücksichtigen ist des weiteren, dass Wasserdampf und nicht flüssiges Wasser Reaktionsprodukt der Verbrennung ist. Kalorimetrische Verbrennungsexperimente haben gezeigt, dass Cyclopentasilan $(SiH_2)_5$ in einer Sauerstoffatmosphäre eine Verbrennungswärme von 35,2 kJ/g freisetzt. Zum Vergleich Decan $C_{10}H_{12}$ weist im gleichen Versuchsaufbau eine Verbrennungswärme von 47,6 kJ/g auf und Testläufe mit Tetramethylsilan $Si(CH_3)_4$ lieferten 45,2 kJ/g. Einige weitere Vergleichswerte werden durch die anschließende Tabelle verdeutlicht:

| Reaktionsmischung | Spezifischer Impuls [N sec/kg] | Adiabatische Verbrennungswärme [K] |
|---|---|---|
| Cyclopentasilan+$O_2$ | 2886 | 2863 |
| $H_2$+$O_2$ | 3632 | 3684 |
| Kerosin+$O_2$ | 2890 | 3736 |
| 1,1-Dimethylhydrazin+$N_2O_4$ | 2777 | 3420 |

Unter der Voraussetzung einer, wenn nötig, geeigneten Trennung von Verbrennungsraum und abrasionsempfindlichen Teilen lässt sich mit dieser Vorgehensweise aus $SiH_4$ deutlich mehr Wärme gewinnen als durch die zweistufige Nutzung ausschließlich des Wasserstoffes nach

$$4 H_2 + 2 O_2 \rightarrow 4H_2O \quad \Delta\Delta fH0 = -1143,2 \text{ kJ/mol.}$$

Bezugszeichenliste

HP, IP; LP     Gasturbinen

HX1- HX6     Wärmetauscher

P1-P3     Pumpen

**Patentansprüche**

1.   Verfahren zur Herstellung von Wasserstoff, **dadurch gekennzeichnet, dass** Silan mit Wasserdampf bei Temperaturen im Temperaturbereich zwischen 400 °C und 1000 °C zu Wasserstoff umgesetzt wird.

**Claims**

1.   Process for the production of hydrogen, **characterized in that** silane is reacted with steam to give hydrogen at temperatures in the temperature range between 400°C and 1000°C.

**Revendications**

1.   Procédé pour la fabrication d'hydrogène, **caractérisé en ce que** l'on fait réagir du silane avec de la vapeur d'eau à des températures dans une gamme de températures entre 400°C et 1000°C pour donner de l'hydrogène.

Fig. 1

Reaktor
T=1000° C

Wasserstoff

HX6

Monosilan

HX5

HP          IP          LP

HX4

Dampf          Frischwasser

SiO₂

HX3

P2          P3          HX1

DA          HX2          P1

Wasserstoff

| Prozess | Version 1 | Version 2 | Version 3a | Version 3b | Version 3c | Version 4 |
|---|---|---|---|---|---|---|
| Reaktortemp. [°C] | 400 | 400 | 1000 | 1000 | 1000 | 1000. |
| Reaktordruck [bar] | 3 | 80 | 80 | 80 | 80 | 300 |
| H2-Temperatur [°C] | 80 | 80 | 80 | 80 | 80 | 80 . |
| H2-Druck [bar] | 3 | 3 | 3 | 30 | 80 | 3 |
| Brennstoffzelle | X | X | X | X | X | X |
| Gasturbine | - | X | X | X | - | X |
| WDK | - | X | X | X | X | X |
| $\dot{m}_{SiH_4}$ [t/h] | 92,9 | 92,9 | 92,9 | 92,9 | 92,9 | 92,9 |
| $\dot{m}_{H_2}$ [t/h] | 23,3 | 23,3 | 23,3 | 23,3 | 23,3 | 23,3 |
| $\dot{W}_{el,netto}$ [MW] | 388,8 | 479,8 | 546,7 | 526,9 | 513,7 | 548,1 |
| davon BZ [MW] | 388,8 | 388,8 | 388,8 | 388,8 | 388,8 | 388,8 |
| $\varepsilon_{tot}$ | 35,00% | 42,98% | 48,98% | 47,20% | 46,02% | 49,04% |
| $\varepsilon_{tot,H2}$ | 67,92% | 75,73% | 81,73% | 79,95% | 78,77% | 81,75% |
| $\eta_{tot}$ | 34,04% | 42,00% | 47,86% | 46,13% | 44,97% | 47,99 |
| $\eta_{tot,H2}$ | 68,08% | 76,04% | 81,90% | 80,17% | 79,01% | 82,02% . |

Fig. 2

EP 2 043 949 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 59045901 A

- WO 20070191772 A2